(19) Europäisches Patentamt / European Patent Office / Office européen des brevets

(11) **EP 3 505 968 B1**

(12) **FASCICULE DE BREVET EUROPEEN**

(45) Date de publication et mention
de la délivrance du brevet:
**16.09.2020  Bulletin 2020/38**

(51) Int Cl.:
**G01S 19/20** *(2010.01)*    **G01S 19/43** *(2010.01)*
**G01S 19/52** *(2010.01)*    **G01S 19/42** *(2010.01)*

(21) Numéro de dépôt: **18214691.0**

(22) Date de dépôt: **20.12.2018**

(54) **PROCEDE DE CONTROLE DE L'INTEGRITE DE L'ESTIMATION DE LA POSITION D'UN PORTEUR MOBILE DANS UN SYSTEME DE MESURE DE POSITIONNEMENT PAR SATELLITE**

KONTROLLVERFAHREN DER INTEGRITÄT DER ABSCHÄTZUNG DER POSITION EINES MOBILEN TRÄGERS IN EINEM SATELLITENPOSITIONIERUNGS-MESSSYSTEM

METHOD FOR MONITORING THE INTEGRITY OF THE ESTIMATE OF THE POSITION OF A MOBILE CARRIER IN A SATELLITE POSITIONING MEASUREMENT SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2017  FR 1701391**

(43) Date de publication de la demande:
**03.07.2019  Bulletin 2019/27**

(73) Titulaire: **Thales**
**92400 Courbevoie (FR)**

(72) Inventeur: **REVOL, Marc**
**26120 UPIE (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**US-A1- 2006 047 413    US-A1- 2010 033 370**
**US-B1- 6 169 957**

**Description**

Le domaine général de l'invention concerne la consolidation de l'intégrité des méthodes de positionnement à haute précision accessibles au travers des constellations de satellites GNSS, acronyme de « Global Navigation Satellite System ». Un domaine privilégié d'application de l'invention est celui de la navigation des drones. Les nouvelles réglementations régissant l'emploi des drones conduisent progressivement les drones à embarquer des systèmes de positionnement autonomes et intègres répondant aux objectifs de sécurité fixés par les autorités aéronautiques. Pour certaines opérations des drones, le positionnement doit être réalisé avec une grande précision pour assurer le référencement précis des appareils embarqués.

Un défaut d'intégrité de la position délivrée par un système de navigation par satellites de type GNSS consiste en l'existence d'un biais de la mesure de position supérieur à un seuil donné sans que cette erreur d'estimation ne soit détectée par le système. En aéronautique, la position GNSS estimée est à tout instant associée à un rayon de protection, permettant d'évaluer le volume à l'intérieur duquel il n'est pas possible de garantir, pour une confiance donnée, la détection d'un biais de position. Les biais peuvent trouver leurs sources dans des pannes non déclarées des satellites, des erreurs liées à la propagation des signaux ou des défauts liés aux récepteurs de ces signaux. Les barrières qui assurent spécifiquement la surveillance des pannes satellites sont connues sous l'acronyme général de « RAIM », signifiant « Receiver Autonomous Integrity Monitoring ». Il en existe de différents types connus sous les acronymes de « RAIM-FDE », signifiant « RAIM- Fault Détection and Exclusion », « RAIM_SBAS », signifiant « RAIM_Satellite Based Augmentation System » ou « ARAIM », signifiant « Advanced RAIM ».

Ces algorithmes, définis pour les opérations aéronautiques, sont utilisés pour vérifier l'intégrité de la position calculée sur la base des mesures de pseudo-distance élaborées à partir des estimations de dates d'arrivées accessibles au travers des codes d'étalement à large bande dits « BPSK », acronyme signifiant « Binary Phase Shift Keying ». Des algorithmes similaires, basés sur les mesures d'incréments de phase de la porteuse des signaux, sont aussi utilisables pour vérifier la cohérence de l'estimation de vitesse calculée sur la base des mesures de doppler intégrés. On citera, à titre d'exemple de réalisation, le brevet US 6 169 957 intitulé « Satellite signal receiver with speed computing integrity control ».

Le risque de perte d'intégrité dépend de la probabilité de non détection de ces algorithmes de monitoring des erreurs, mais aussi de l'occurrence des évènements redoutés générés au niveau des satellites tels que des pannes non détectées par le système satellitaire. Ainsi, seule l'intégrité de l'estimation de position calculée sur la base des mesures de pseudo-distances peut être vérifiée, car les fournisseurs de services GNSS ne garantissent actuellement que le taux de défauts existant sur les pseudo-distances et non sur les mesures liées à la phase de porteuse. Le document US 2006/047413 divulgue un procédé de contrôle de l'intégrité de l'estimation de la position d'un porteur mobile, ledit procédé vérifiant qu'une mesure de phase de porteuse est cohérente d'une mesure de pseudo-distance de code.

Malgré la diversité des méthodes capables de fournir des mesures de positionnement GNSS à haute précision sur la base des techniques dites « PPP », acronyme de « Precise Point Positioning » ou « RTK », acronyme de « Real Time Kinematic » et malgré l'avènement des constellations bi-fréquence qui simplifient l'algorithme de positionnement précis et le rendent plus robuste, il n'est toujours pas possible de leur associer un risque de perte d'intégrité, ce qui les rend difficilement exploitables pour des applications « SOL », acronyme de « Safety Of Life ».

Aussi, les récepteurs certifiés pour les opérations aéronautiques n'utilisent que les mesures de pseudo-distance pour réaliser le calcul de la position. L'intégrité de la solution de position est évaluée par le récepteur sur la base de la dispersion des erreurs de pseudo-distances calculée à partir des résidus de moindre carré des mesures de pseudo-distance. Les mesures de doppler, caractéristiques de l'évolution de la phase de la porteuse liée au déplacement relatif, ne sont pas, pour leur part, utilisées pour consolider l'intégrité, alors qu'elles fournissent des précisions bien plus importantes que le code et, potentiellement, permettraient d'atteindre des rayons de protection bien plus petits pour la gestion du déplacement relatif.

Les techniques PPP et RTK, déployées dans le domaine de la géodésie utilisent directement les mesures de phase des porteuses des satellites, et sont connues pour fournir des précisions de position de niveau décimétrique voire centimétrique, mais sans capacité d'assurer l'intégrité de la mesure de position.

Plusieurs tentatives ont cependant été avancées pour réaliser la surveillance de l'intégrité du point RTK, sur la base des mesures de phases et de leurs ambiguïtés, mais celles-ci sont limitées à des porteurs à faible dynamique ou à des analyses par post-traitement ou nécessitant une latence incompatible avec une surveillance en temps réelles des erreurs. De plus, l'inconnu pesant sur le taux d'occurrence de défauts de la phase porteuse émise par le satellite ne permet pas de garantir a priori le risque de perte d'intégrité de telles mesures précises.

Le procédé selon l'invention permet de fournir une surveillance en temps réel des biais de positionnement dérivée de la phase de porteuse des signaux GNSS, qui ne soit pas limitée à des opérations à faible dynamique du porteur. Il peut être mis en œuvre dans tous systèmes de positionnement par satellite compatible de la technique dite « Cinématique Tems Réel », connue aussi sous l'appellation « RTK » signifiant « Real Time Kinematic ».

Plus précisément, l'invention a pour objet un procédé de contrôle de l'intégrité de l'estimation de la position d'un porteur mobile, ladite position étant établie par un système de mesure de positionnement par satellites, ladite estimation étant obtenue par les méthodes dites de « cinématique temps réel », lesdites méthodes étant basées sur les mesures de phase de porteuse des signaux dits « GNSS » issus des satellites, ledit procédé vérifiant qu'une mesure de phase de porteuse est cohérente d'une mesure de pseudo-distance de code, caractérisé en ce que ledit procédé comporte:

- une première étape E1 de calcul de la position et du temps initiaux du porteur, ladite première étape réalisée sur la base des pseudo-distances estimées sur les axes à vue des satellites, à partir des mesures du temps reçues portées par les codes d'étalement des signaux émis par les satellites ;
- une seconde étape E2 vérifiant l'intégrité de la résolution de position et de temps initiaux réalisée à partir des pseudo-distances satellites réalisées sur la base d'un algorithme standard de surveillance des pannes satellites de type « RAIM » ;
- une troisième étape E3 de calcul de la vitesse du porteur, à une pluralité d'instants d'observation, ladite troisième étape étant réalisée sur la base des mesures de doppler apparents estimées sur les axes à vue satellites, à partir des mesures de phase de porteuse des signaux satellites ;
- une quatrième étape E4 de vérification qu'à chacun desdits instants d'observation, l'évolution à court terme de la phase de porteuse des signaux reçus sur chacun des axes à vue satellite est cohérente avec la vitesse calculée à l'étape précédente ;
- une sixième étape E6 et E7 de vérification qu'à chacun desdits instants d'observation, la position filtrée obtenue à partir des mesures de pseudo-distance filtrées à long terme par la phase porteuse est intègre.

Avantageusement, le procédé comporte une huitième étape E8 de résolution des ambigüités entières de phase dans le domaine d'incertitude associé à la position filtrée.

Avantageusement, le procédé comporte une neuvième étape de calcul de la position « cinématique temps réel » sur la base des mesures de phase porteuse E9 et une dixième étape E10 de vérification de l'intégrité finale de la position consistant à appliquer un algorithme standard de surveillance des pannes satellites de type « RAIM » sur les résidus de phase différentielles permettant d'assurer l'intégrité finale du calcul de position différentielle et à lui associer un rayon de protection.

L'invention sera mieux comprise et d'autres avantages apparaîtront à la lecture de la description qui va suivre donnée à titre non limitatif et grâce aux figures annexées parmi lesquelles :

La figure 1 représente le principe général de la méthode de positionnement par « RTK » ;
La figure 2 représente le synoptique général d'un canal de réception GNSS ;
La figure 3 représente le synoptique de la détermination de l'attitude GPS ;
La figure 4 représente la détermination du vecteur vitesse d'une antenne ;
La figure 5 illustre la relation ente le nombre d'ambigüités d'écart de phase différentielle et la direction d'incidence du signal ;
La figure 6 illustre la définition des ambigüités de phases entières et flottantes ;
La figure 7 est un exemple de recherche des ambigüités de phases entière dans le domaine d'incertitude des ambigüités flottantes ;
La figure 8 représenté l'intégralité du procédé de positionnement de type RTK selon l'invention.

Le procédé selon l'invention est mis en œuvre dans des récepteurs GNSS bi-constellations GPS-Galileo de type « DFMC », acronyme signifiant « Dual Frequency Multi Constellation Receiver ». Le procédé selon l'invention nécessite des adaptations simples du traitement de base de la position afin d'ajouter des contrôles permettant d'assurer l'intégrité de la mesure de positionnement. Ces adaptations sont à la portée de l'homme du métier, spécialiste des systèmes de positionnement par satellite.

Dans la suite de la description, l'expression « court terme » correspond au rythme de calcul de la vitesse GNSS, soit 0.1 seconde. L'expression « long terme » correspond à la durée du filtrage code-porteuse, classiquement compris entre 60 secondes et 120 secondes.

Le principe de ce procédé repose sur l'élaboration d'un contrôle de l'intégrité de l'estimation de position RTK, obtenue à partir des phases de porteuses des signaux GNSS, en partant d'une position moins précise mais dont on a pu s'assurer de l'intégrité élaborée à partir des retards de code GNSS.

Cette consolidation repose sur l'hypothèse que les deux méthodes de positionnement établies sur les phases porteuses et sur les retards de codes sont affectées simultanément par des défauts de génération du signal satellite, et donc que :

- toute non-intégrité détectée par l'algorithme de surveillance de la position, calculée à partir des retards de codes, induit aussi une non-intégrité de la position construite à partir de la phase porteuse.
- tant que l'algorithme de surveillance de la position calculée à partir des pseudo-distances déclare la position intègre, alors la position construite à partir de la phase porteuse est potentiellement intègre, à condition qu'elle vérifie aussi de son coté des contraintes de cohérence entre mesures de phase porteuse.

L'algorithme de positionnement précis selon l'invention comporte deux étapes principales :

- Une estimation des ambiguïtés flottantes, basée sur les mesures de pseudo-distance de codes et leurs incertitudes, résultant de la résolution classique de position par moindre carré ;
- Une détermination des ambigüités entières de phase de porteuse autour de cette première position dans le domaine d'indétermination des ambigüités flottantes, d'où découle la résolution de la seconde position précise.

L'intégrité de l'estimation de la position précise implique donc que chacune de ces deux étapes soit elle-même intègre, donc que:

- Les mesures de pseudo-distances sur le code soient intègres
- Les mesures de phase sur la porteuse soient intègres

Si on dénomme les assertions suivantes:

- P : « Le positionnement précis est intègre »,
- Q1 : « L'algorithme de positionnement sur le retard de code est intègre »
- Q2 : « L'algorithme de positionnement sur la phase de porteuse est intègre »

Il est équivalent d'écrire, à chaque instant t que :

$$P(t) => [Q1(t) \; {}^\wedge Q2(t)]$$

ou encore,

non [Q1(t) ^Q2(t)] => non [P(t)]
non [Q1(t)] v non [Q2(t)] => non [P(t)]
« non [Q1(t)] » peut être évalué par les algorithmes standards de contrôle d'intégrité de la position obtenue à partir des pseudo-distance de code. L'algorithme de contrôle de « non [Q2(t)] » est l'objet essentiel de la présente invention.

Cet algorithme ne consiste pas à en une estimation des résidus de mesures de phase de porteuse en raison de l'incertitude trop importante reposant sur la résolution des ambigüités entières de phase porteuse et en raison du grand nombre de combinaisons évaluées. La résolution des ambigüités entières de phase n'est efficace que dans l'hypothèse où les mesures de phases sont toutes intègres, c'est-à-dire qu'il n'existe pas de biais de mesure supérieur à l'incertitude de mesure de phase. Par contre, en présence d'un ou plusieurs biais de mesure de phase, la combinatoire importante des ambigüités entières peut entrainer une convergence de l'algorithme de recherche sur une combinaison non intègre, tout en respectant des contraintes de dispersion réduite sur les résidus de mesure de phase porteuse.

Pour pallier cette difficulté, on propose une approche en deux temps :

- garantir l'intégrité de la résolution initiale, basée sur le filtrage des mesures de pseudo-distance de code dont on a préalablement vérifié l'intégrité par un algorithme standard (RAIM, ....),
- vérifier qu'à tout instant l'évolution de la phase de porteuse reste cohérente de l'estimation de vitesse menée en parallèle de l'estimation de position à partir des mesures de doppler apparent obtenus en divisant les incréments de phase par l'intervalle de temps considéré.

Le cumul de ces deux vérifications permet d'assurer que la position précise initiale à un temps TO est intègre, et que les nouvelles mesures de phases utilisées pour entretenir la position précise à un instant T supérieur à TO restent valides et intègres. On réduit ainsi le risque que la mesure de phase porteuse devienne incohérente de la mesure de pseudo-distance de code, et donc que l'estimation de position précise soit non intègre alors que la mesure de position standard sur le code aurait été déclarée intègre.

Le procédé selon l'invention décrit une mise en œuvre possible, mais pas exclusive, de l'approche décrite ci-dessus. Le principe général d'un positionnement de type RTK repose sur l'estimation précise du bras de levier entre une station de référence de position connue et l'antenne de l'utilisateur, sur la base des mesures différentielles de phase des porteuses des signaux issus des satellites.

La méthode RTK reposant sur des mesures différentielles de phase porteuse, on considère que tous les biais communs entre la station de référence et l'utilisateur peuvent être annulés et que les sources de perte d'intégrité résiduelles sont liées à des défauts provenant de la propagation locale. A titre d'exemples, ces défauts sont dus à des perturbations troposphériques ou à celles du front ionosphérique ou aux trajets multiples du signal ou aux biais d'antennes. Les biais récepteurs communs à tous les satellites sont aussi éliminés par double différence, au détriment d'un axe à vue.

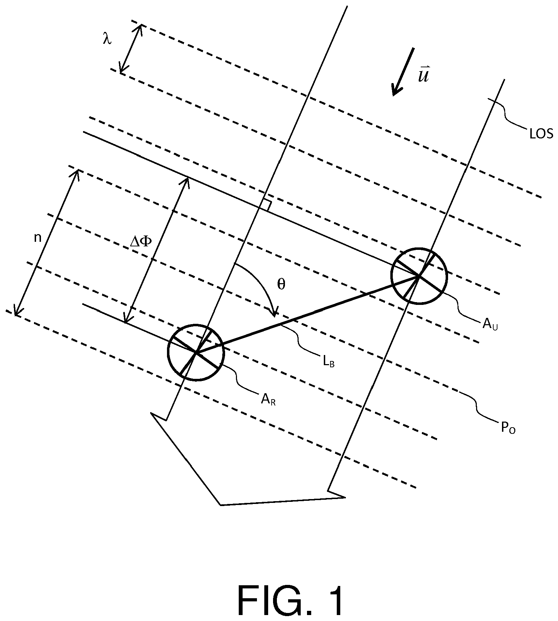

Cette méthode est représentée sur la figure 1. Les deux croix cerclées représentent respectivement les positions de la station de référence $A_R$ et l'antenne de l'utilisateur $A_U$. La direction ou « LOS », signifiant « Line Of Satellite » d'un des satellites de la constellation GNSS est indiquée par la flèche blanche. Elle est caractérisée par le vecteur $\vec{u}$. Les traits pointillés perpendiculaires à cette direction représentent les plans d'onde $P_O$ du signal émis par ce satellite. Deux plans d'onde consécutifs sont séparés de la longueur d'onde d'émission $\lambda$ de ce signal.

La ligne de base $L_B$ est la ligne joignant la station à l'utilisateur. Elle est représentée par le vecteur $\vec{b}$. La direction de cette ligne de base fait un angle $\theta$ avec la LOS du satellite. On note n le nombre entier de plans d'onde séparant le plan d'onde de l'antenne de référence de l'antenne de l'utilisateur, ce nombre est également connu sous le nom d'ambiguïté. F est la fraction de longueur d'onde restant entre l'antenne de référence et l'antenne de l'utilisateur. Dans la direction du satellite, la phase différentielle ou différence de marche $\Delta\Phi$ est définie géométriquement par la projection ou le produit scalaire de la longueur de la ligne de base sur la direction du satellite considéré et vaut donc :

$$\Delta\Phi = (n + F) * \lambda = \vec{u} \bullet \vec{b}$$

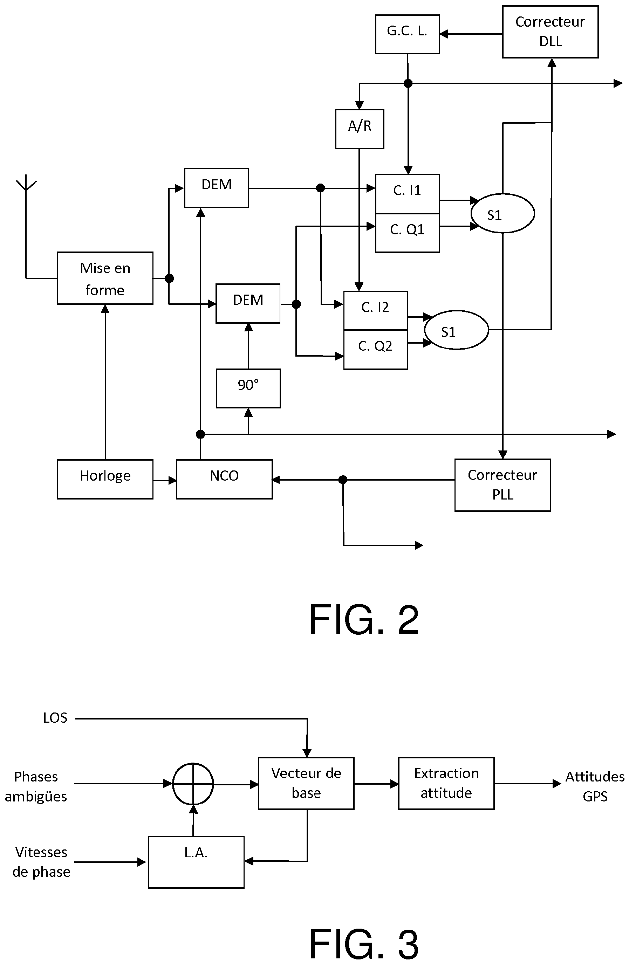

Pour délivrer une mesure de phase, un récepteur reçoit et traite le signal GPS du satellite à l'aide d'une boucle de poursuite en code dite « DLL », acronyme signifiant « Delay-Locked Loop » et d'une boucle de poursuite en porteuse dite « PLL », acronyme signifiant « Phase-Locked Loop » comme représenté sur la figure 2. Les différents sigles de cette figure 2 représentent les fonctions suivantes :

- Mise en forme : Cette fonction couvre l'ensemble des fonctions permettant de mettre en forme le signal reçu du satellite en signal exploitable. Ce sont essentiellement les fonctions de filtrage, de démodulation, de correction automatique de gain ou CAG et de conversion du signal analogique en signal numérique ou CAN.
- Horloge : Cette fonction délivre un signal d'horloge de référence.
- NCO : Ce sigle correspond aux oscillateurs numériques de contrôle.
- DEM : Ce sigle signifie démodulateur.
- C.I et C. Q : Ces sigles représentent les corrélateurs permettant de délivrer le signal et le signal en quadrature.
- G.C.L. : Ce sigle signifie : « Générateur de Code Local ».

Dans le cas de deux antennes, les signaux reçus démodulés par le code et la porteuse s'écrivent:

$$r_1(t) = s_1(t) + n_1(t) = a.D(t).\exp j(2\pi f t + \varphi) + n_1(t)$$

$$r_2(t) = s_2(t) + n_2(t) = a.D(t).\exp j(2\pi f t + 2\pi f_0 \tau + \varphi) + n_2(t)$$

où,

- s1(t) et s2(t) sont respectivement les signaux satellites reçus par chaque antenne,
- n1(t) et n2(t) sont respectivement les bruits reçus par chaque antenne,
- f est la fréquence porteuse résiduelle,
- f0 est la fréquence porteuse reçue,
- $\varphi$ est la phase initiale du signal, indéterminée,
- D(t) est le signe de la donnée qui module éventuellement la porteuse,
- a est l'amplitude du signal traité,

- τ est le retard de propagation de l'onde entre les deux antennes séparée d'une distance d et d'incidence θ tel que défini précédemment. Il vaut, c étant la vitesse de le lumière :

$$\tau = \frac{d.\cos(\theta)}{c}$$

La détermination du bras de levier est obtenue par calcul à partir des mesures de phases ambiguës, en additionnant l'ambiguïté préalablement initialisée et entretenue, puis en inversant la projection de la ligne de base sur les directions des différents satellites comme représenté sur le synoptique de la figure 3. Sur ce synoptique, le terme « L.A. correspond à « Lever d'Ambiguïtés ». Les LOS des satellites sont issus des données dites « PVT », acronyme signifiant « Position, Velocity, Time » résolu par le positionnement GPS et du protocole de validation dit « PVS », acronyme de « Protocol Validation System » calculé par le récepteur à partir des données de navigation reçues qui sont essentiellement les éphémérides ou l'almanach et du temps résolu.

Le « Lever d'Ambiguités » initial consiste à sélectionner pour chaque satellite le nombre entier de longueurs d'onde correspondant à la partie entière de la différence de marche du signal GPS. Cette sélection est prise dans un domaine de recherche incluant au départ toutes les valeurs possibles d'ambiguïté. En absence de connaissance a priori, le domaine est borné pour chaque satellite par le nombre entier de longueur d'onde contenu dans la ligne de base.

La vitesse du porteur dans le repère géographique local peut être estimée sur la base des signaux GNSS à partir de l'évolution de la phase du signal observée dans chacun des axes à vue des satellites. Cette évolution de la phase est significative de la variation du signal doppler, lui-même relié à l'évolution de la distance satellite-porteur. La vitesse porteur peut être ainsi résolue par la méthode des moindres carrés, une dizaine d'axes à vue GPS étant communément disponibles, ce nombre pouvant même être augmenté par des satellites des autres constellations.

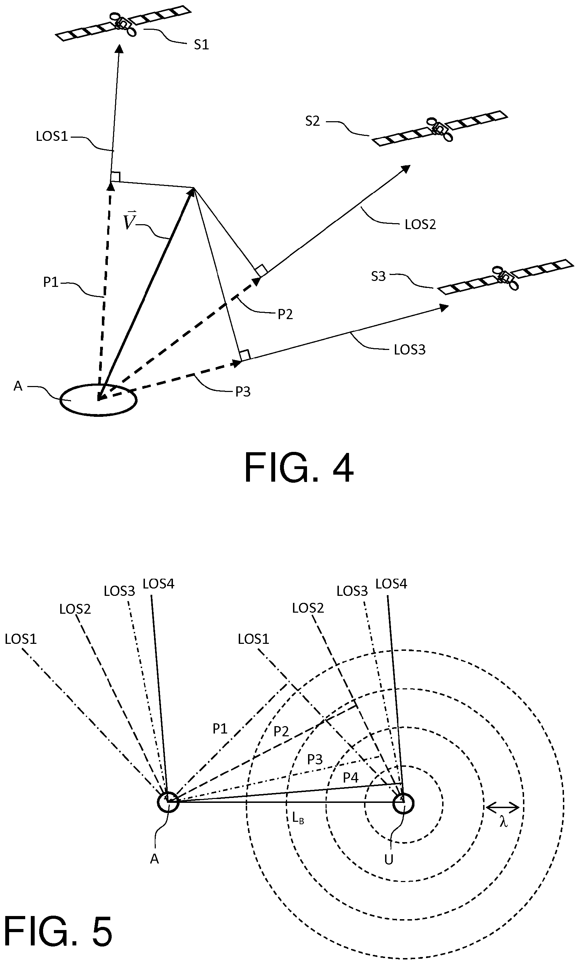

La figure 4 illustre ce principe. Trois satellites S1, S2 et S3 sont vus de l'antenne A qui est animée d'une vitesse $\vec{V}$. La mesure des trois projections P1, P2 et P3 du vecteur vitesse $\vec{V}$ sur les trois directions LOS1, LOS2 et LOS3 permettent de retrouver les coordonnées du vecteur vitesse de l'antenne.

Le procédé de contrôle de l'intégrité de la position précise selon l'invention comporte plusieurs étapes. L'étape essentielle du procédé consiste, avant tout calcul du bras de levier en position entre la station de référence et l'utilisateur établi sur la base des mesures différentielles de phases porteuses qui correspond au traitement classique du procédé RTK, à vérifier que les phases mesurées sur les différents satellites sont cohérentes et compatibles du traitement RTK.

Pour les mesures de phase, on ne s'intéresse qu'à la cohérence locale des mesures entre satellites, sans considérer les erreurs absolues liées à l'émission des signaux au niveau satellites, erreurs liées à la synchronisation, à l'orbite puisque les biais communs sont éliminés par la différentiation.

L'intégrité des phases de référence, mesurées et envoyées par la station de référence étant préalablement contrôlée par la station de référence différentielle, de manière classique, sur la base des résidus de phases porteuses estimés à partir de la connaissance précise de la position de l'antenne de réception, la vérification de la cohérence des mesures de phases locales des différents satellites assure que les signaux reçus sont correctement synchronisés entre eux, et donc que les phases différentielles peuvent être utilisées pour le calcul du bras de levier utilisateur-station de référence, démontrant ainsi, qu'il n'existe pas d'incohérences entre les mesures de phases différentielles liées aux différents satellites qui proviendrait de phénomènes locaux non maitrisés autour de l'utilisateur.

La difficulté de cette approche porte sur la vérification de l'intégrité des phases porteuses au niveau de l'utilisateur, si on ne connait ni sa position ni sa vitesse. Pour réaliser cette vérification, on utilise les mesures de pseudo-distance filtrées grâce à la phase porteuse.

Le principe consiste à réduire le domaine spatial dans lequel est réalisé le levé d'ambigüité des phases porteuses nécessaire à la résolution de la position RTK. Ainsi, s'il est possible de trouver une combinaison des phases à « ambiguïtés entières » compatible avec la position obtenue sur la base des mesures de code filtrées avec les mesures de doppler porteuse, alors la position RTK calculée est déclarée « intègre » dans un rayon de protection compatible des erreurs de mesure de phase, soit quelques centimètres.

Les figures 5, 6 et 7 permettent de mieux comprendre ce principe. La figure 5 représente une antenne A séparée d'un utilisateur U. L'antenne et l'utilisateur reçoivent des signaux issus d'une constellation de satellites. Sur la figure 5, à titre d'exemple, le nombre de satellites est de quatre. Chaque satellite est perçu dans une direction notée LOS. A chaque satellite, correspond une projection P différente sur la ligne de base notée $L_B$ sur la figure 5. Les cercles concentriques en pointillés correspondent à des incertitudes de positionnement. Leurs rayons est égal à un nombre entiers de longueurs d'onde λ comme indiqué sur la figure 5.

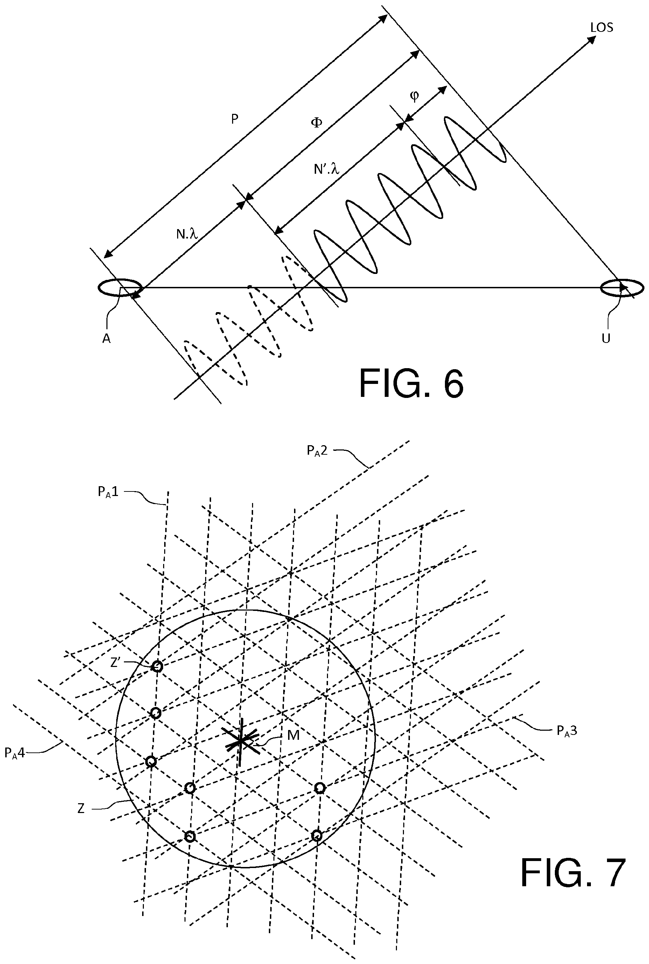

La figure 6 représente la décomposition d'une projection P issue d'un satellite dans la ligne de direction LOS sur la ligne de base $L_B$. La mesure de cette projection P se décompose en une valeur observée Φ et une valeur indéterminée égale à un nombre entier N de longueurs d'onde λ appelé aussi ambiguïtés de phase entières. A titre d'exemple, dans le cas de la figure 6, N vaut 3. La valeur observée Φ comporte également un second nombre entier de longueurs d'onde N', appelé aussi ambiguïtés de phase flottantes, et une phase φ égale à une fraction de longueur d'onde. A titre d'exemple, dans le cas de la figure 6, N' vaut 4. On a la relation:

$$P = \Phi + N.\lambda = N'.\lambda + \varphi + N.\lambda$$

Il est donc nécessaire de lever l'ambiguïté sur la valeur indéterminée, c'est-à-dire sur le nombre N. Pour lever cette indétermination, on utilise le fait que les différentes projections issues des lignes de direction des différents satellites doivent être cohérentes entre elles. La figure 7 illustre ce principe. Elle représente un point de mesure M. Il est entouré d'une zone Z circulaire d'incertitude des ambiguïtés flottantes, calculées à partir des pseudo-distances. Les séries de traits parallèles en pointillés indiquent la position des plans des ambiguïtés entières pour chaque direction de satellite, ces directions étant perpendiculaires à ces plans. Sur la figure 7, quatre séries de plans $P_A$ sont représentés et notés $P_A1$, $P_A2$, $P_A3$ et $P_A4$. A l'intérieur de la zone d'incertitude, seules quelques zones d'incertitude Z' représentées par des cercles en traits gras correspondent à des positionnements possibles. Ces zones Z' sont calculées à partir des écarts de phase et des ambiguïtés entières possibles. Dans le cas de la figure 7, ces zones correspondent aux intersections conjointes de quatre plans $P_A1$, $P_A2$, $P_A3$ et $P_A4$.

L'intégrité et le rayon de protection de la position filtrées calculés à partir des mesures de pseudo-distance filtrées, par filtrage code-porteuse est assurée sur la base:

-    du contrôle de l'intégrité de la position initiale, établi à partir des pseudo-distances non filtrées à partir des algorithmes de monitoring certifiés de type RAIM, ARAIM, SBAS, ...
-    du contrôle de l'intégrité des mesures de doppler intégrés qui servent au filtrage code porteuse des pseudo-distances,
-    du contrôle de l'intégrité et du rayon de protection de la position filtrée, calculée à partir des pseudo-distances filtrés via un RAIM simple.

Le principe consiste à vérifier les conditions de mise en œuvre du RTK, c'est-à-dire que l'algorithme RTK est utilisable, compte tenu de la qualité des mesures. Pour cela, on réalise un contrôle réalisé sur la base des mesures de pseudo-distance filtrées grâce à la phase porteuse selon les étapes suivantes :

a) vérification que l'espace de recherche des « ambiguïtés entières » de phase, première étape nécessaire pour réduire le domaine d'exploration des combinaisons entre les mesures inter-satellites est effectivement réduit au domaine d'incertitude en position, calculé sur la base des pseudo-distance. Cette compacité est assurée via le contrôle d'intégrité en position à partir des mesures de pseudo-distances. En effet, l'utilisation de mesures de temps d'arrivée non-intègres conduirait à retenir des phases entières erronées dans le domaine d'incertitude en position

b) vérification que les mesures de pseudo-distance intégrées ne sont pas affectées d'erreur liées à d'éventuels biais sur les doppler intégrés dérivés de la phase porteuse, que l'on peut réaliser sur la base du contrôle d'intégrité de la position filtrée, RAIM appliqué sur les mesures de pseudo-distances filtrées. On vérifie ainsi que l'évolution de la phase porteuse ou doppler relatif est cohérente sur tous les axes satellites. Si des mesures de pseudo-distance intégrées ne sont pas cohérentes, alors on en déduit que les mesures de doppler intégré correspondant et donc les phases élémentaires subissent elles-aussi des déformations locales tels que des effets de trajets multiple ou interférences, des effets de fronts ionosphériques, des sauts de cycle, qui de fait interdisent leur utilisation pour le calcul de la phase différentielle du RTK

c) si les deux étapes précédentes sont effectivement franchies, on peut appliquer l'équivalent d'un RAIM sur les résidus de phase différentielles qui permet d'assurer l'intégrité finale du calcul de position différentielle et de lui associer un rayon de protection, de façon tout à fait similaire au RAIM classique en pseudo-distance. Cette dernière vérification permet de prendre en compte les erreurs qui n'affectent pas les deux premiers tests, et qui porteraient sur d'éventuelles dispersions des mesures différentielle de phase issues par exemple de la dispersion des réponses en phase des étages RF du récepteur, qui peuvent différer selon les satellites et qui correspondent à des réponse d'antennes, des effets doppler sur fonction de transfert RF, ...

Le procédé selon l'invention consiste à mettre en place les différents moyens de traitement permettant d'assurer que l'évolution de la phase de la porteuse est cohérente de l'évolution de la phase du code, en vue de transposer par équivalence l'intégrité certifiée sur la position en phase de code, vers une intégrité de position en phase de porteuse.

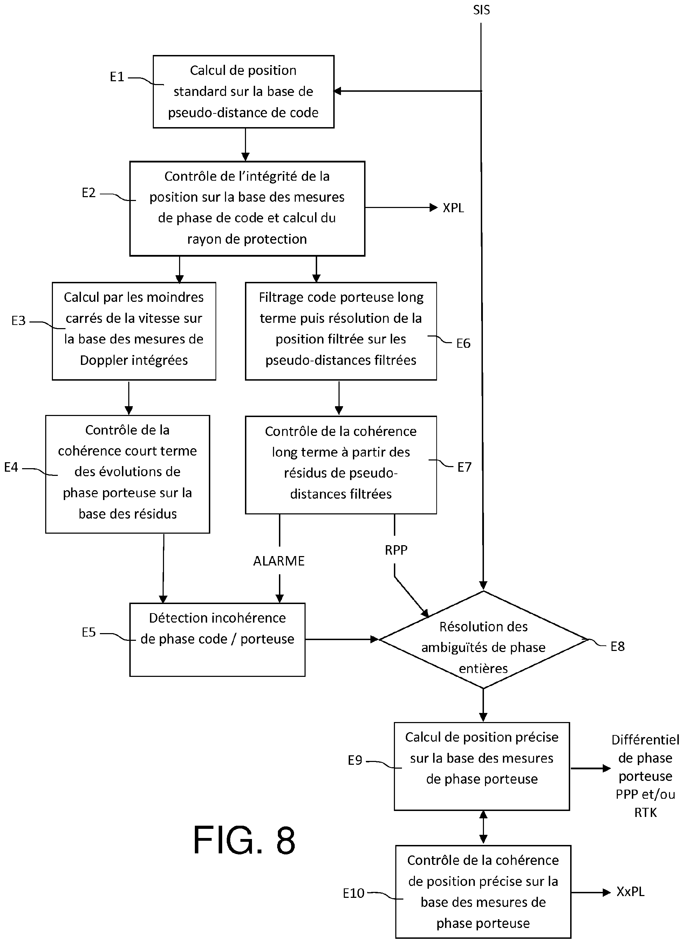

L'enchainement des différentes étapes du procédé est représenté en figure 8:

Etape E1 : A partir des données issus des satellites, données dites « SIS », acronyme signifiant « Signal In Space », calcul de la position standard sur la base de pseudo-distances de code.

Etape E2 : Réalisation d'un premier contrôle de l'intégrité sur la base des mesures de pseudo-distance de code précédentes. Cette étape permet de s'assurer que tous les satellites participants au PVT sont intègres, dans un rayon de protection calculé.

Etapes E3 et E4 : Vérification que les mesures de doppler intégrées associées sont elles aussi intègres, au travers d'un contrôle d'intégrité de la vitesse GNSS tel que défini précédemment. Ce test permet de détecter l'apparition à court terme d'incohérences sur les mesures d'incrément de phase porteuse. Une telle incohérence sur l'évolution implique un défaut d'intégrité court terme sur la mesure de phase absolue de la porteuse.

Etapes E6 et E7 : Vérification de la cohérence des évolutions de phase de code et de phase de porteuse, par un second contrôle de l'intégrité réalisé sur les mesures de pseudo-distance filtrées. Ce test permet de détecter l'apparition à long terme de biais issus de dérive lente, sur les mesures d'incrément de phase porteuse et de vérifier qu'il est possible de résoudre les ambiguïtés entières de phase dans le domaine d'incertitude ou rayon de protection calculé sur la position filtrée

Etape E5 : Réalisation d'un dernier contrôle sur la base des mesures de phase porteuse issues de la résolution du point précis correspondant aux résidus d'écart de phase du bras de levier entre antenne utilisateur et antenne de référence.

Les deux vérifications suivantes, menées conjointement, permettent de vérifier la cohérence des évolutions de phase et de code :

- Vérification de la cohérence de l'évolution à court terme, basée sur les résidus d'incréments de phases ou doppler intégré obtenus après résolution de la vitesse sur la base de la phase porteuse, pour vérifier la cohérence de l'évolution à court terme ;
- Vérification de la cohérence de l'évolution à moyen terme, basée sur les résidus d'incréments de pseudo-distances filtrées obtenus après résolution de la position filtrée sur la base des mesures de pseudo-distance filtrées par la porteuse, pour vérifier la cohérence à long terme.

En soit, le test de la distribution des résidus de vitesse, réalisé sur les doppler intégrés, ne permet pas de quantifier un risque d'intégrité global sur la vitesse, puisque l'occurrence des événements redoutés sur la phase porteuse n'est pas connu, mais permet malgré tout de vérifier avec une confiance donnée que, à court terme, la vitesse calculée est cohérente des mesures de doppler intégré sur l'ensemble des satellites.

Ce test sur les résidus de vitesse permet donc d'assurer que les mesures de doppler intégré ne sont pas affectées d'erreur, et donc que, tant que le test sur les résidus de position est lui-même positif, il n'y a pas lieu de soupçonner d'incohérence entre évolutions de phase porteuse et évolution de phase de code, ce qui rend les mesures de phase porteuse utilisables pour réaliser un positionnement précis et intègre, avec le même risque de non intégrité que celui associé à la positon.

Ce test permet d'identifier l'apparition rapide d'une erreur puisque les résidus sont calculés à court terme dites mesures « snapshot ». Par contre, ce test ne permet pas toujours de détecter des dérives lentes de phase porteuse, qui entraineraient doucement la vitesse vers une valeur erronée.

Pour pallier cette limitation, il convient donc de mettre en place un test de cohérence des évolutions de phase de code et de porteuse à long terme, sur une ou plusieurs profondeurs temporelles compatibles d'évolutions non détectables par le test à court terme. Par exemple, si on considère que des évolutions inférieures à 5cm/s ne seraient pas détectable à court terme avec les contraintes de risque de non détection standard, alors il faut un profondeur d'observation minimale de 100s, pour pouvoir détecter une dérive de la phase porteuse supérieure à 5m, correspondant à 5 $\sigma$ de l'écart type de pseudo-distance.

Ce test permet d'assurer que, même en cas de dérive lente pernicieuse, peu probable en cas de défaut sur un seul satellite, et donc impliquant une intention, l'erreur sur la position finale issue de la phase de porteuse reste de l'ordre de celle tolérée, c'est-à-dire dans le rayon de protection sur la position sur la phase de code.

Bien sûr, l'algorithme utilisé pour l'estimation de position précise va lui aussi être susceptible de non intégrité.

Le second contrôle sur les résidus de phase porteuse de la résolution de position précise peut ne pas être nécessaire, considérant que les tests précédents assurent l'intégrité des mesures de phases utilisées par l'algorithme de calcul de position précis. Cependant, la phase de la porteuse est soumise à des imperfections de propagation telles la scintillation et la divergence ionosphérique, les dérives différentielles troposphériques, les trajets multiples qui introduisent des bruits supplémentaires susceptibles de perturber la résolution des ambiguïtés entières appliquée pour les algorithmes de positionnement sur phase porteuse.

Il ne s'agit plus alors de détecter une panne satellite, mais de vérifier la pertinence de la solution précise, par contrôle de la cohérence des écarts de double différence de phase porteuse issu de l'algorithme de résolution de la position précise par la méthode des moindre carrés.

Le principe de la surveillance de la position RTK résolue utilise un test statistique reposant sur la redondance des mesures de phase. Ce test est de même nature que le test utilisé pour un PVT classique dit test du Khi-2. Il est appliqué à chaque occurrence de mesure d'attitude, sur l'ensemble des axes à vue disponibles, en vue d'identifier d'éventuelles dégradations de la précision de mesure d'attitude effectué par un RAIM d'attitude.

Il est en fait complété par une projection du seuil de détection des résidus, sur l'axe des mesures du bras de levier, permettant d'associer à l'imprécision sur les résidus de phase différentielle, une imprécision sur la position relative du porteur.

L'introduction d'un « rayon de protection de la position relative » ou « RPP » tel qu'indiqué sur la figure 8 est alors possible et permet de contrôler la disponibilité du RAIM d'attitude, vis à vis des probabilités de fausse alarme et de non détection choisies.

On peut alors passer à l'étape E8 qui consiste en la résolution des ambigüités de phases entières telle que décrite précédemment. Le fait de réussir avec succès la résolution des ambigüités entières dans l'espace d'incertitude de la position filtrée, obtenue après filtrage des pseudo-distance par des évolutions de phase porteuse dont on a vérifié l'intégrité selon les étapes E3 et E4, permet de s'assurer que cette solution « cinématique temps réel » reste intègre.

L'étape E9 consiste à calculer la position précise sur la base des mesures de phase porteuse et, enfin, l'étape E10 consiste à contrôler la cohérence des mesures de position précise sur la base des mesures de phase porteuse. Cette dernière étape permet de prendre en compte les erreurs qui n'affectent pas les deux premiers tests, et qui portent sur d'éventuelles dispersions des mesures différentielles de phase utilisées pour le calcul de position précise.

**Revendications**

**1.** Procédé de contrôle de l'intégrité de l'estimation de la position d'un porteur mobile, ladite position étant établie par un système de mesure de positionnement par satellites, ladite estimation étant obtenue par les méthodes dites de « cinématique temps réel », lesdites méthodes étant basées sur les mesures de phase de porteuse des signaux dits « GNSS » issus des satellites, ledit procédé vérifiant qu'une mesure de phase de porteuse est cohérente d'une mesure de pseudo-distance de code, **caractérisé en ce que** ledit procédé comporte:

- une première étape (E1) de calcul de la position et du temps initiaux du porteur, ladite première étape réalisée sur la base des pseudo-distances estimées sur les axes à vue des satellites, à partir des mesures du temps reçues portées par les codes d'étalement des signaux émis par les satellites ;
- une seconde étape (E2) vérifiant l'intégrité de la résolution de position et de temps initiaux réalisée à partir des pseudo-distances satellites calculées sur la base d'un algorithme standard de surveillance des pannes satellites de type « RAIM » ;
- une troisième étape (E3) de calcul de la vitesse du porteur, à une pluralité d'instants d'observation, ladite troisième étape étant réalisée sur la base des mesures de doppler apparents estimés sur les axes à vue satellites, à partir des mesures de phase de porteuse des signaux satellites ;
- une quatrième étape (E4) de vérification qu'à chacun desdits instants d'observation, l'évolution à court terme de la phase de porteuse des signaux reçus sur chacun des axes à vue satellite est cohérente avec la vitesse calculée à l'étape précédente ;
- une sixième étape (E6, E7) de vérification qu'à chacun desdits instants d'observation, la position filtrée obtenue à partir des mesures de pseudo-distance filtrées à long terme par la phase porteuse est intègre.

**2.** Procédé de contrôle de l'intégrité de la position d'un porteur mobile selon la revendication 1, **caractérisé en ce que** le procédé comporte une huitième étape (E8) de résolution des ambigüités entières de phase dans le domaine d'incertitude associé à la position filtrée.

**3.** Procédé de contrôle de l'intégrité de la position d'un porteur mobile selon l'une des revendications précédentes, **caractérisé en ce que** le procédé comporte une neuvième étape de calcul de la position « cinématique temps réel » sur la base des mesures de phase porteuse (E9) et une dixième étape (E10) de vérification de l'intégrité finale de la position consistant à appliquer un algorithme standard de surveillance des pannes satellites de type « RAIM » sur les résidus de phase différentielles permettant d'assurer l'intégrité finale du calcul de position différentielle et à lui associer un rayon de protection.

**Patentansprüche**

**1.** Kontrollverfahren der Integrität der Positionsschätzung eines mobilen Trägers, wobei die Position durch ein Satelliten-Positionierung-Messsystem ermittelt wird, wobei die Schätzung anhand der sogenannten "Echtzeit-Kinematik"-Verfahren erzielt wird, wobei die Verfahren auf Phasenmessungen des Trägers von sogenannten von den Satelliten stammenden "GNSS"-Signalen basieren, wobei das Verfahren überprüft, dass eine Messung einer Phase eines Trägers mit einer Messung eines Code-Pseudoabstandes übereinstimmt, **dadurch gekennzeichnet, dass** das Verfahren Folgendes umfasst:

- einen ersten Schritt (E1) des Berechnens der Anfangsposition und -zeit des Trägers, wobei der erste Schritt anhand der auf den Achsen in Sicht der Satelliten geschätzten Pseudoabstände bewerkstelligt wird, anhand der empfangenen Zeitmessungen, welche durch die Ausbreitungscodes der durch die Satelliten ausgesandten Signale getragen werden;
- einen zweiten Schritt (E2), welcher die Integrität der Auflösung der Anfangsposition und -zeit überprüft, welcher anhand der Pseudoabstände der Satelliten bewerkstelligt wird, welche auf der Grundlage eines Standardüberwachungsalgorithmus von Satellitenstörungen vom Typ "RAIM" berechnet werden;
- einen dritten Schritt (E3) des Berechnens der Geschwindigkeit des Trägers zu einer Vielzahl von Beobachtungszeitpunkten, wobei der dritte Schritt auf der Basis der scheinbaren Doppler-Messungen bewerkstelligt wird, welche auf den Achsen in Sicht der Satelliten geschätzt werden, anhand von Phasenmessungen eines Trägers der Satellitensignale;
- einen vierten Schritt (E4) des Überprüfens, dass zu jedem der Beobachtungszeitpunkte die kurzfristige Entwicklung der Phase des Trägers der auf jeder der Achsen in Sicht eines Satelliten empfangenen Signale mit der im vorherigen Schritt berechneten Geschwindigkeit übereinstimmt;
- einen sechsten Schritt (E6, E7) des Überprüfens, dass zu jedem der Beobachtungszeitpunkte die gefilterte Position, welche anhand der Messungen des durch die Phase des Trägers langzeitgefilterten Pseudoabstandes erzielt wird, integer ist.

2. Kontrollverfahren der Integrität der Position eines mobilen Trägers nach Anspruch 1, **dadurch gekennzeichnet, dass** das Verfahren einen achten Schritt (E8) der Auflösung der vollständigen Phasenzweideutigkeiten in dem der gefilterten Position zugeordneten Ungewissheitsbereich umfasst.

3. Kontrollverfahren der Integrität der Position eines mobilen Trägers nach einem der vorhergehenden Ansprüche, **dadurch gekennzeichnet, dass** das Verfahren einen neunten Schritt des Berechnens der "Echtzeit Kinematik"-Position auf der Basis der Messungen der Phase eines Trägers (E9) und einen zehnten Schritt (E10) des Überprüfens der abschließenden Integrität der Position umfasst, darin bestehend, einen Standardüberwachungsalgorithmus von Satellitenstörungen vom Typ "RAIM" auf die Differenzialphasenreste anzuwenden, der dazu dient, die abschließende Integrität der Differenzialpositionsberechnung sicherzustellen und ihr einen Schutzradius zuzuordnen.

**Claims**

1. A method for checking the integrity of the estimation of the position of a mobile carrier, said position being established by a satellite positioning measurement system, said estimation being obtained by methods called "real-time kinematic" methods, said methods being based on the carrier phase measurements of the signals, called "GNSS" signals, originating from the satellites, said method verifying that a carrier phase measurement is consistent with a code pseudo-distance measurement, **characterised in that** said method comprises:

- a first step (E1) of computing the initial position and time of the carrier, said first step being performed on the basis of the estimated pseudo-distances on the line of sight of the satellites, on the basis of the received time measurements carried by the spreader codes of the signals transmitted by the satellites;
- a second step (E2) of verifying the integrity of the resolution of the initial position and time performed on the basis of the satellite pseudo-distances computed on the basis of a standard algorithm for monitoring satellite breakdowns of the "RAIM" type;
- a third step (E3) of computing the speed of the carrier, at a plurality of observation instants, said third step being performed on the basis of the apparent Doppler measurements estimated on the line of sight of the satellites, on the basis of the carrier phase measurements of the satellite signals;
- a fourth step (E4) of verifying that, at each of said observation instants, the short-term evolution of the carrier phase of the signals received on each of the satellite lines of sight is consistent with the speed computed in the preceding step;
- a sixth step (E6, E7) of verifying that, at each of said observation instants, the filtered position obtained on the basis of the pseudo-distance measurements long-term filtered by the carrier phase is dependable.

2. The method for checking the integrity of the position of a mobile carrier as claimed in claim 1, **characterised in that** the method comprises an eighth step (E8) of resolving the phase integer ambiguities in the uncertainty domain that is associated with the filtered position.

3. The method for checking the integrity of the position of a mobile carrier as claimed in one of the preceding claims, **characterised in that** the method comprises a ninth step of computing the "real-time kinematic" position on the basis of the carrier phase measurements (E9) and a tenth step (E10) of verifying the final integrity of the position involving applying a standard algorithm for monitoring satellite breakdowns of the "RAIM" type on the differential phase residuals allowing the final integrity of the differential position computation to be provided and a protection radius to be associated therewith.

# FIG. 1

FIG. 2

FIG. 3

FIG. 4

FIG. 5

FIG. 6

FIG. 7

FIG. 8

**EP 3 505 968 B1**

**RÉFÉRENCES CITÉES DANS LA DESCRIPTION**

**Documents brevets cités dans la description**

- US 6169957 B
- US 2006047413 A